# EUROPÄISCHE PATENTSCHRIFT

(11) **EP 4 173 816 B1**
(45) Veröffentlichungstag und Bekanntmachung des Hinweises auf die Patenterteilung: **15.05.2024**
(21) Anmeldenummer: 22203867.1
(22) Anmeldetag: 26.10.2022
(51) Int. Cl.: B32B 5/26, D04H 1/4291, A41D 19/00, B32B 5/02, B32B 27/12, B32B 27/32

(54) **FASERMATTE, HANDSCHUH UND VERWENDUNG**
FIBER MAT, GLOVE AND USE
MATELAS DE FIBRES, GANT ET UTILISATION

(30) Priorität: 26.10.2021 DE 102021127746; 08.11.2021 DE 102021128941
(43) Veröffentlichungstag der Anmeldung: 03.05.2023
(73) Patentinhaber: Henkys, Anne-Marie, 26789 Leer (DE)
(72) Erfinder: Henkys, Anne-Marie, 26789 Leer (DE)
(74) Vertreter: Brinkmann & Partner

(56) Entgegenhaltungen:
- EP-A1- 1 035 244
- DE-A1-102018 128 125
- US-A1- 2016 325 007

## Beschreibung

Die Erfindung betrifft eine Fasermatte zum Schutz und/oder zur Reinigung von Oberflächen. Die Erfindung betrifft darüber hinaus einen Handschuh mit einer erfindungsgemäßen Fasermatte und verschiedene Verwendungen einer erfindungsgemäßen Fasermatte.

Gattungsgemäße Fasermatten sind dem Grunde nach aus dem Stand der Technik bekannt, so dass es eines gesonderten druckschriftlichen Nachweises nicht bedarf.

Insbesondere in Bereich von Küchen und Sanitäreinrichtungen sind Oberflächen, insbesondere von Möbeln, Fußböden und dergleichen, einer vergleichsweise großen Beanspruchung durch Flüssigkeiten ausgesetzt. Während im Sanitärbereich besagte Oberflächen hauptsächlich in Kontakt mit Wasser oder Lösungen auf Wasserbasis, insbesondere Seifenlauge, kommen, werden Oberflächen im Küchenbereich darüber hinaus durch fett- und ölhaltige Flüssigkeiten und Lösungen beansprucht.

Dies führt bei diesen Oberflächen bereits kurzfristig zu Verschmutzungen, welche insbesondere in den betreffenden Bereichen aus Hygieneaspekten heraus jedoch unbedingt zu vermeiden sind. Auf derart mit Flüssigkeiten kontaminierten Oberflächen können sich Keime, d.h. insbesondere Bakterien und Viren, weitaus besser halten und gegebenenfalls vermehren, als auf trockenen Oberflächen. Auch vor dem Hintergrund der andauernden COVID-19/SARS-Corona-Virus 2 Epidemie nehmen die an die Hygiene gestellten Anforderungen für Gastronomiebetriebe immens zu.

Sind Oberflächen mittel- oder langfristig Flüssigkeitsbeanspruchung ausgesetzt, führt dies zu Beschädigungen, wie etwa der optischen Beeinträchtigung oder dem Aufquellen von insbesondere holzhaltigen Möbelstücken.

Es ist dabei durchaus bekannt, solche beanspruchten Oberflächen beispielsweise mit Papiertüchern, Folien oder Planen auszulegen oder abzudecken. Papiertücher haben jedoch den Nachteil, dass sie aufgrund ihrer weitgehend hydrophilen Eigenschaften lediglich gegenüber wässrigen Lösungen ein akzeptables Absorptionsvermögen aufweisen. Darüber hinaus feuchten solche Tücher vergleichsweise schnell durch. Hierdurch wird der negative Effekt auf die Oberflächen bei stärkerem Kontakt mit der Flüssigkeit lediglich verzögert, nicht jedoch verhindert. Auch bietet ein solches Tuch daher und aufgrund der Materialeigenschaften keinerlei Schutz vor Oberflächen besonders stark beanspruchenden Säuren und Basen. Im Küchenbereich kommen jedoch eine Reihe von zumindest essigsauren Flüssigkeiten und Lösungen zum Einsatz.

Folien und/oder Planen aus Kunststoff oder auch aus Metall verfügen demgegenüber über keinerlei Absorptionsvermögen gegenüber Flüssigkeiten. Flüssigkeit kondensiert daher auf der Folie und bildet Flüssigkeitsansammlungen, wie etwa einen Flüssigkeitsfilm. Hierdurch wird jedoch die Gefahr von Kontamination durch die kondensierte Flüssigkeit nicht verhindert, sondern geradewegs verstärkt.

Zu diesen Zwecken wurden gattungsgemäße Fasermatten entwickelt.

Eine solche gattungsgemäße Fasermatte ist beispielsweise aus der EP 2 524 986 B1 bekannt. Sie dient insbesondere zur Entfettung von Speisen oder Lebensmittelbedarfsgegenständen und wird mit großem Erfolg in verschiedenen Bereichen eingesetzt.

DE 10 2018 128125 A1 offenbart eine Fasermatte zur Reinigung von Oberflächen, bestehend aus drei übereinanderliegend angeordneten Polypropylen-Vliesen mit wenigstens bereichsweise verfestigten Fasern in Form eines Außenvlieses, welches als Spinnvlies ausgebildet ist, und eines Kernvlieses, welches als Schmelz-Blas-Vlies ausgebildet ist.

Obwohl sich die gattungsgemäße Fasermatte so wie aus EP 2 524 986 B1 bekannt dem Grunde nach bewährt hat, besteht Verbesserungsbedarf hinsichtlich ihrer Eignung als Oberflächenschutz.

Der Erfindung liegt damit die **Aufgabe** zugrunde, eine gattungsgemäße Fasermatte derart weiterzubilden, dass die aus dem Stand der Technik genannten Nachteile vermieden werden.

Die **Lösung** der voranstehend genannten Aufgabe sieht eine Fasermatte zum Schutz und/oder zur Reinigung von Oberflächen vor, bestehend aus zwei übereinanderliegend angeordneten Polypropylen-Vliesen mit wenigstens bereichsweise verfestigten Fasern in Form eines Außenvlieses, welches als Spinnvlies ausgebildet ist, und eines Kernvlieses, welches als Schmelz-Blas-Vlies ausgebildet ist, sowie bestehend aus einer für Flüssigkeiten im Wesentlichen undurchlässigen Schutzfolie, welche auf der dem Außenvlies abgewandten flächigen Seite des Kernvlieses angeordnet ist.

Die erfindungsgemäße Fasermatte stellt erstmals einen wirksamen Oberflächenschutz gegenüber Flüssigkeiten bereit. Die einzelnen Schichten der Fasermatte wirken dabei in synergetischer Weise zusammen. Das als Spinnvlies ausgebildete Außenvlies bildet eine glatte, flusenfreie und abriebsbeständige Außenfläche der Fasermatte bereit. Durch das Außenvlies wird sichergestellt, dass die Fasermatte nicht durch unsachgemäße Handhabung von außen beschädigt wird. Das Außenvlies schützt damit die darunter liegenden Schichten, insbesondere das Kernvlies, und erlaubt eine Flüssigkeitsdiffusion von deren Außenseite zum Kernvlies. Das als Schmelz-Blas-Vlies ausgebildete Kernvlies dient demgegenüber der Absorption und Speicherung von Flüssigkeiten. Um zu verhindern, dass das Kernvlies Flüssigkeit nach unten, also in Richtung der abzudeckenden Oberfläche abgibt, ist die dem Außenvlies abgewandte flächige Seite des Kernvlieses mit der Schutzfolie versehen. Insbesondere ist die Schutzfolie auf die betreffende Seite des Kernvlieses aufkaschiert. Hierdurch wird insgesamt eine Fasermatte geschaffen, welche bei bestimmungsgemäßer Abdeckung der zu schützenden Oberfläche einen Flüssigkeitstransport durch das Außenvlies hin zum Kernvlies zum Zwecke der Speicherung gestattet, und die zu schützende Oberfläche durch die Schutzfolie flüssigkeitsdicht abdichtet. Die möglicherweise mit Keimen kontaminierte Flüssigkeit wird hierdurch wirkungsvoll in der Kernschicht eingeschlossen, so dass eine anschließende Kontaktierung einem Benutzer nahezu ausgeschlossen ist. Infektionen und/oder die Verbreitung von Keimen werden damit verhindert.

Vliese bestehen allgemein betrachtet aus lose neben- und übereinanderliegenden Fasern, welche noch nicht miteinander verbunden sind. Damit man diese Vliese zum Oberflächenschutz verwenden kann, müssen sie aufgrund der zu erwartenden damit verbundenen mechanischen Beanspruchung verfestigt werden. Dies ist insbesondere in Ausgestaltung der Fasermatte als Handschuh von Vorteil, da diese regelmäßig vergleichsweise hohen mechanischen Beanspruchungen ausgesetzt sind.

Die Erfindung schlägt die Verwendung von Polypropylen-Vliesen, d.h. Vliesen aus Polypropylen-Fasern vor. Polypropylen ist das thermoplastische Polymer des Propylens und zeichnet sich durch hohe Härte, Rückstellfähigkeit, Steifheit und Wärmebeständigkeit aus. Kurzfristiges Erwärmen von Polypropylen ist bis 140°C möglich, ohne dass eine Gefügeveränderung verursacht wird. Im vorliegenden Fall ist das Polypropylen derart modifiziert, dass wasserhaltige und fetthaltige Flüssigkeiten absorbiert werden können.

Gemäß einem bevorzugten Merkmal der Erfindung ist es vorgesehen, dass die Vliese aus reinem Polypropylen gebildet sind. Dies bedeutet zum einen, dass ein Polypropylen-Homopolymer verwendet wird. Dies bedeutet zum anderen, dass das verwendete Polypropylen und damit auch die Vliese frei von jeglichen Zusatzstoffen sind. Insbesondere ist es frei von Farben, Additiven, Weichmachern, Stabilisatoren und Flussmitteln. Die Fasermatte ist dadurch vollkommen Geschmacks- und Geruchsneutral und vermittelt einen optisch reinen Eindruck. Darüber hinaus werden die hervorragenden lipophilen Eigenschaften der Fasermatten durch die ausschließliche Verwendung eines Homopolymers weiter verbessert.

Erfindungsgemäß ist das Außenvlies als Spinnvlies (Spunbond-Vlies) ausgebildet. Die Gewinnung des Spinnvlieses erfolgt über die Schmelzeextrusion von Polypropylen durch Spinndüsen. Hierdurch entsteht in Kombination mit der erfindungsgemäßen Verfestigung der Fasern eine glatte, flusenfreie und abriebsbeständige Außenfläche. Ebenfalls erfindungsgemäß ist das Kernvlies als Schmelz-Blas-Vlies (Meltblown-Vlies) ausgebildet. Die grundsätzliche Herstellung der faserartigen Polypropylen-Vliese gehört zum Stand der Technik. Der dreilagige Aufbau der Fasermatte hat den Vorteil, dass das Außenvlies eine vergleichsweise gute mechanische Stabilität hinsichtlich ihrer Beständigkeit gegen Abrieb und Fusselbildung aufweist. Demgegenüber weist das Meltblown-Vlies besonders vorteilhafte Eigenschaften mit Blick auf die Flüssigkeitsabsorption auf, während die Schutzfolie einen Flüssigkeitskontakt mit der zu schützenden Oberfläche insgesamt verhindert.

Damit die Polypropylen-Vliese im Sinne der vorliegenden Erfindung weiterverarbeitet und benutzt werden können, müssen sie verfestigt werden. Für diese Aufgabe hat sich die Verfestigung, d.h. Bindung der Vliesfasern bzw. Vliesfilamente auf thermischem Wege durch Kalandrierung als besonders günstig erwiesen, weil sich dabei gleichzeitig zwei Polypropylen-Vliesschichten unterschiedlichen Flächenmassen kombinieren und binden lassen. Die Bindung erfolgt an Kontaktpunkten der beheizten Kalanderwalzen. An diesen Kontaktpunkten verschmelzen die Polypropylenfasern der verschiedenen Vliese und bilden an diesen Punkten Verfestigungsstellen aus. Die Verfestigungs- bzw. Verbindungsstellen weisen vorzugsweise eine runde, insbesondere kreisförmige Kontur auf. Eine solche Kontur gewährleistet die gleichmäßige Verfestigung in allen Flächenrichtungen der Fasermatte. Eine fertige Fasermatte wird nach der Verfestigung erhalten. Hierzu wird die Verfestigung bei einer definierten Temperatur ausgeführt, sodass ein vollständiges Schmelzen der Vliesfasern vermieden wird und die Vliesstruktur erhalten bleibt.

Vorzugsweise ist es nun vorgesehen, dass wenigstens ein Teil der Verfestigungsstellen derart über die Fasermatte verteilt ist, dass sie wenigstens ein regelmäßiges Polygon bilden. Hierdurch wird über die gesamte Flächenerstreckung der Fasermatte hinweg eine verbesserte Verfestigung erreicht, was in vorteilhafter Weise zu einer gegenüber dem Stand der Technik weiter verbesserten Beständigkeit gegenüber Abrieb und Fusselbildung führt. Ein "regelmäßiges Polygon" ist ein Vieleck, das sowohl gleichseitig als auch gleichwinklig ist. Die Ecken eines regelmäßigen Polygons liegen damit alle auf einem virtuellen Kreis, wobei benachbarte Ecken unter dem gleichen Mittelpunktswinkel erscheinen. Vorzugsweise ist das Polygon ein einfaches Polygon in Abgrenzung zum überschlagenen Polygon.

Zur weiteren Verbesserung der vorgenannten mechanischen Eigenschaften ist es ferner bevorzugt vorgesehen, dass die Verbindungsstellen derart verteilt sind, dass sie eine Mehrzahl von Polygonen bilden. Ferner ist es bevorzugt, dass die Polygone aus Fünfecken und/oder aus Sechsecken gebildet sind. Gemäß einem weiteren bevorzugten Merkmal der Erfindung ist es vorgesehen, dass wenigstens ein Teil der Verfestigungsstellen derart über die Fasermatte verteilt ist, dass sie wenigstens zwei verknüpfte, vorzugsweise ecken- und/oder kantenverknüpfte, regelmäßige Polygone bilden. Es ist besonders bevorzugt, dass die Gesamtheit aller Verfestigungsstellen derart über die Fasermatte verteilt ist, dass sie eine Vielzahl von kantenverknüpften regelmäßigen Sechsecken bildet. Hierdurch wird eine Fasermatte erhalten, die im Vergleich zum Stand der Technik fusselfrei und abriebsbeständig ist.

Gemäß einem bevorzugten Merkmal der Erfindung weist das Kernvlies ein Flächengewicht von 80 g/m² bis 500 g/m², bevorzugt 80 g/m² bis 380 g/m², insbesondere von 180 g/m² bis 230 g/m², auf. Grundsätzlich verhält sich die Absorptionskapazität des Kernvlieses proportional zum Flächengewicht ist. Es ist jedoch zwischen theoretischen und praktischen Kapazitäten zu unterscheiden. Während die theoretische Kapazität gleichförmig mit dem steigenden Flächengewicht zunimmt, verhält es sich bei der praktischen Kapazität nicht so. Es hat sich diesbezüglich herausgestellt, dass sich die praktische Kapazität ab einer bestimmten Zunahme des Flächengewichts asymptotisch an einen Maximalwert pro Flächeneinheit annähert. In dem mit Bezug auf das Flächengewicht beanspruchten Bereiche ist die praktische Absorptionskapazität des Kernvlieses unter Berücksichtigung von Materialeinsatz sowie Stabilitäts- und Handhabungsaspekten optimiert. In diesem Bereich verfügt das Kernvlies über eine theoretische maximale Absorptionskapazität des 25-fachen Flächengewichts und eine praktische Absorptionskapazität des 15-fachen Flächengewichts des Kernvlieses. Bei einem besonders bevorzugten Flächengewicht von 230 g/m² beträgt die maximale theoretische Absorptionskapazität daher 5,75 l/m² und die praktische Aufnahmekapazität 3,45 l/m².

Gemäß einem weiteren Merkmal der Erfindung weist das Außenvlies ein Flächengewicht von 7 g/m² bis 40 g/m², insbesondere von 20 g/m² bis 30 g/m² auf. In Verbindung mit der Verfestigung der Vliesschichten wird hierdurch eine besonders abriebsbeständige und für Flüssigkeiten gut permeable Außenschicht erzeugt. Der Flüssigkeitstransport zum Kernvlies ist hierdurch in vorteilhafter Weise verbessert.

Gemäß einem bevorzugten Merkmal der Erfindung ist vorgesehen, dass die Schutzfolie aus einem Kunststoff, insbesondere Polypropylen oder Polyethylen, insbesondere HDPE, gebildet ist. Diese Materialien sind einerseits für Flüssigkeiten, insbesondere wässrige Lösungen im Wesentlichen undurchlässig. Der Begriff "im Wesentlichen" bezeichnet einen Zustand, in dem eine gegebenenfalls stattfindende Diffusion durch die Schutzschicht vernachlässigbar ist und die darunterliegende Oberfläche nicht beeinträchtigt. Vorzugsweise ist die Schutzschicht vollständig flüssigkeitsdicht ausgebildet. Bevorzugt ist die Schutzschicht mit einer Schichtdicke von 30 µm bis 60 µm und einer Dichte von 0,8 g/cm³ bis 1 g/cm³, insbesondere 0,93 g/cm³ bis 0,97 g/cm³, gebildet ist. In dieser Ausgestaltung ist die Schutzschicht zumindest für wasserbasierte Flüssigkeiten vollständig undurchlässig.

Gemäß einem bevorzugten Merkmal der Erfindung ist vorgesehen, dass die Schutzfolie unmittelbar auf die dem Außenvlies abgewandte flächige Seite des Kernvlieses aufkaschiert ist. Durch die Kaschierung kann die Schutzfolie mit einfachen Mitteln in stabiler Weise mit dem Kernvlies verbunden werden. Vorzugsweise überdeckt die Schutzfolie die mittels Kalandrieren gebildeten Verbindungsstellen zwischen Kernschicht und Außenschicht wenigstens bereichsweise. Die Verbindungsstellen werden von der Schutzfolie, welche nicht Gegenstand des Kalandrierens ist, vor schädlicher Außeneinwirkung geschützt.

Die Fasermatte ist prinzipiell geeignet, alle Flüssigkeiten aufzusaugen. Insbesondere wässrige Flüssigkeiten, flüssige Fette, Öle, Kohlenwasserstoffe sowie deren Gemische, Emulsionen und Lösungen, d.h. alle Flüssigkeiten die im Speisen- und Getränkebereich, aber auch im Sanitär- und Reinigungsbereich vorkommen.

Die Erfindung betrifft ferner einen Handschuh mit einer erfindungsgemäßen Fasermatte.

Es ist hierbei bevorzugt, dass die Fasermatte dabei derart angeordnet ist, dass die dem Kernvlies abgewandte flächige Seite des Außenvlieses die Außenseite des Handschuhs bildet und dass die dem Kernvlies abgewandte flächige Seite der Schutzfolie dem Innenraum des Handschuhs zugewandt ist.

So kann ein Handschuh, der im Bereich der Handinnenfläche, der Handaußenseite und/oder im Fingerbereich mit wenigstens einer erfindungsgemäßen Fasermatte ausgerüstet ist für die bequeme und sichere Säuberung von Oberflächen verwendet werden. Ein besonderer Vorteil ergibt sich daraus, dass der Handschuh verhindert, dass der Benutzer mit der aufzuwischenden Flüssigkeit unmittelbar in Kontakt kommt. Eine Ansteckung mit gegebenenfalls in der Flüssigkeit enthaltenen Keimen ist daher ausgeschlossen. Dies ergibt sich dadurch, dass das Kernvlies die Flüssigkeit über das Außenvlies aufnimmt, aber die Schutzfolie den Innenraum des Handschuhs und damit die Hand des Benutzers flüssigkeitsundurchlässig abdichtet. Auch ist der Benutzer durch den Handschuh zumindest vor solchen Substanzen geschützt, die regelmäßig im Küchen- oder Sanitärbereich eingesetzt werden, wie etwa schwache bis mittelstarke Laugen und Säuren.

Vorteilhafterweise schützt die innenliegende Schutzfolie den Anwender insbesondere vor Verätzungen, allergischen Reaktionen und Verschmutzung. Der Handschuh ist besonders geeignet zum Desinfizieren von allen glatten Oberflächen wie Schreibtischen, Arbeitsplatten und Fronten, in Küchen- und Sanitärbereichen in Verbindung mit den handelsüblichen, geeigneten Desinfektionsmittel. Er ist überdies auch geeignet zum Desinfizieren und Reinigen von Tür- und Fenstergriffen, Handläufern und Geländern und dergleichen.

Besonders geeignet ist der Einsatz des Handschuhs bei der schnellen, sauberen und praktischen Umsetzung von Hygienekonzepten für Restaurants und Cafés, aber auch in Krankenhäusern, Laboren und Arztpraxen.

Die Erfindung betrifft insofern die Verwendung einer erfindungsgemäßen Fasermatte als Teil eines Handschuhs oder Überstülpers für Objekte zum Zwecke der Flüssigkeitsabsorption auf Oberflächen.

Die Erfindung betrifft ferner die Verwendung einer erfindungsgemäßen Fasermatte nach als flächige Ein-, Unter- oder Auflage zum Schutz von Oberflächen, insbesondere für Möbel, Fahrzeuginnenräume und Fußböden. Bevorzugt ist die Verwendung für Haushalte, insbesondere für Stauräume und Schubladen, Küchen, Badezimmer, insbesondere unter Spül- und/oder Waschtischen, Krankenhäuser, Pflegeeinrichtungen, Arztpraxen, Werkstätten, Industrieanlagen sowie für Einsatzfahrzeuge, wie etwa Krankenwagen.

Die Erfindung wird nachfolgend anhand eines Ausführungsbeispiels verdeutlicht. Dabei zeigt:

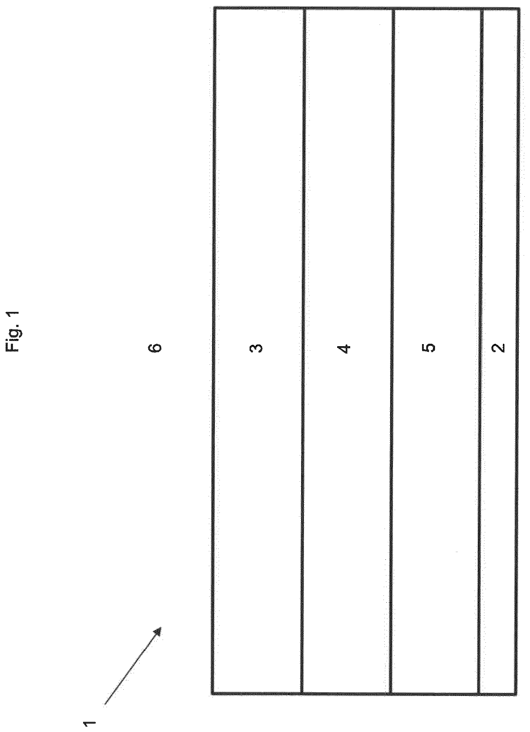

- Fig. 1: den Schichtaufbau einer erfindungsgemäßen Fasermatte in schematischer Schnittdarstellung.

Figur 1 zeigt eine Fasermatte 1. Die Fasermatte 1 deckt eine Oberfläche 2, beispielsweise einen Schubladenboden, vollständig flüssigkeitsdicht ab.

Die Fasermatte 1 weist ein Außenvlies 3 auf, welche unmittelbar mit der Umgebung 6 in Austausch steht. Unterhalb des Außenvlieses 3 ist ein Kernvlies 4 angeordnet. Außenvlies 3 und Kernvlies 4 sind in einer Vielzahl von nicht dargestellten Verfestigungsstellen mittels Kalandrieren stoffschlüssig miteinander verbunden. Unmittelbar auf das Kernvlies 4 ist eine Schutzfolie 5 aufkaschiert. Die Schutzfolie 5 überdeckt dabei die Verfestigungsstellen. Die Schutzfolie ihrerseits steht unmittelbar in Kontakt mit der abgedeckten Oberfläche 2.

Das Außenvlies 3 ist vorliegend als Spinnvlies aus sortenreinem Polypropylen gebildet Es weist ein Flächengewicht von 20 g/m² bis 30 g/m² auf.

Das Kernvlies 4 ist vorliegend als Schmelz-Blas-Vlies aus sortenreinem Polypropylen gebildet. Es weist ein Flächengewicht von 180 g/m² bis 230 g/m² auf. Es verfügt dabei über eine theoretische maximale Absorptionskapazität des 25-fachen Flächengewichts und eine praktische Absorptionskapazität des 15-fachen Flächengewichts.

Die Schutzfolie 5 ist vorliegend aus sortenreinem Polypropylen gebildet. Sie weist eine Schichtdicke von 60 µm und eine Dichte von 0,9 g/cm³ auf. Sie ist damit vollständig flüssigkeitsdicht.

### Bezugszeichen

- 1: Fasermatte
- 2: Oberfläche
- 3: Außenvlies
- 4: Kernvlies
- 5: Schutzfolie
- 6: Umgebung

## Patentansprüche

1. Fasermatte zum Schutz und/oder zur Reinigung von Oberflächen, bestehend aus zwei übereinanderliegend angeordneten Polypropylen-Vliesen mit wenigstens bereichsweise verfestigten Fasern in Form eines Außenvlieses, welches als Spinnvlies ausgebildet ist, und eines Kernvlieses, welches als Schmelz-Blas-Vlies ausgebildet ist, sowie bestehend aus einer für Flüssigkeiten im Wesentlichen undurchlässigen Schutzfolie, welche auf der dem Außenvlies abgewandten flächigen Seite des Kernvlieses angeordnet ist.

2. Fasermatte nach Anspruch 1, **dadurch gekennzeichnet, dass** Kernvlies und Außenvlies mittels Kalandrieren an einer Vielzahl von über die Fasermatte verteilten Verfestigungsstellen stoffschlüssig miteinander verbundenen sind.

3. Fasermatte nach Anspruch 2, **dadurch gekennzeichnet, dass** das Kernvlies ein Flächengewicht von 80 g/m² bis 500 g/m², vorzugsweise 100 g/m² bis 500 g/m², bevorzugt 80 g/m² bis 380 g/m², insbesondere von 180 g/m² bis 230 g/m², aufweist und dass das Außenvlies ein Flächengewicht von 7 g/m² bis 40 g/m², insbesondere von 20 g/m² bis 30 g/m² aufweist.

4. Fasermatte nach einem der Ansprüche 1 bis 3, **dadurch gekennzeichnet, dass** die Schutzfolie aus einem Kunststoff, insbesondere Polypropylen oder HDPE, mit einer Schichtdicke von 30 µm bis 60 µm und einer Dichte von 0,8 g/cm³ bis 1 g/cm³, insbesondere 0,93 g/cm³ bis 0,97 g/cm³, gebildet ist.

5. Fasermatte nach einem der Ansprüche 2 bis 4, **dadurch gekennzeichnet, dass** die Schutzfolie unmittelbar auf die dem Außenvlies abgewandte flächige Seite des Kernvlieses aufkaschiert ist, wobei die Schutzfolie die mittels Kalandrieren gebildeten Verbindungsstellen zwischen Kernschicht und Außenschicht wenigstens bereichsweise überdeckt.

6. Fasermatte nach Anspruch 5 wenigstens ein Teil der Verfestigungsstellen derart über die Fasermatte verteilt ist, dass diese Verfestigungsstellen die Ecken eines gedachten regelmäßigen Polygons bilden, wobei gedachte Verbindungslinien zwischen unmittelbar benachbarten Ecken in einem Winkel ungleich 90° zueinander stehen, wobei wenigstens ein Teil der Verfestigungsstellen derart über die Fasermatte verteilt ist, dass sie wenigstens zwei kantenverknüpfte regelmäßige Polygone bilden, wobei wenigstens eines der regelmäßigen Polygone ein regelmäßiges Fünfeck oder ein regelmäßiges Sechseck ist.

7. Handschuh **gekennzeichnet durch** eine Fasermatte nach einem der Ansprüche 1 bis 6.

8. Handschuh nach Anspruch 7, **dadurch gekennzeichnet, dass** die Fasermatte derart angeordnet ist, dass die dem Kernvlies abgewandte flächige Seite des Außenvlieses die Außenseite des Handschuhs bildet und dass die dem Kernvlies abgewandte flächige Seite der Schutzfolie dem Innenraum des Handschuhs zugewandt ist.

9. Verwendung einer Fasermatte nach einem der Ansprüche 1 bis 6 als Teil eines Handschuhs oder Überstülpers für Objekte zum Zwecke der Flüssigkeitsabsorption auf Oberflächen.

10. Verwendung einer Fasermatte nach einem der Ansprüche 1 bis 6 als flächige Ein-, Unter- oder Auflage zum Schutz von Oberflächen, insbesondere für Möbel, Fahrzeuginnenräume und Fußböden.

## Claims

1. Fiber mat for protection and/or cleaning of surfaces, the fiber mat consisting of two polypropylene non-wovens arranged on top of each other including fibers consolidated in some areas in the form of an outer non-woven, which is designed as a spunbond, and a core non-woven, which is designed as a meltblown, and consisting of a protective film impermeable to liquids disposed on the flat side of the core non-woven facing away from the outer non-woven.

2. Fiber mat according to claim 1, **characterized in that** the core non-woven and the outer non-woven are bonded to each other at a plurality of consolidation points distributed over the fiber mat by means of calendaring.

3. Fiber mat according to claim 2, **characterized in that** the core non-woven has a basis weight of 80 g/m² to 500 g/m², preferably 100 g/m² to 500 g/m², preferably 80 g/m² to 380 g/m², in particular from 180 g/m² to 230 g/m², and that the outer non-woven fabric has a basis weight from 7 g/m² to 40 g/m², in particular from 20 g/m² to 30 g/m².

4. Fiber mat according to any one of claims 1 to 3, **characterized in that** the protective film is formed from a plastic, in particular polypropylene or HDPE, with a layer thickness of 30 µm to 60 µm and a density of 0.8 g/cm³ to 1 g/cm³, in particular 0.93 g/cm³ to 0.97 g/cm³.

5. Fiber mat according to any one of claims 2 to 4, **characterized in that** the protective film is laminated directly onto the flat side of the core non-woven facing away from the outer non-woven, the protective film covering the joints formed by calendering between the core layer and the outer layer at least in certain areas.

6. Fiber mat according to claim 5, **characterized in that** at least a part of the consolidation points is distributed over the fiber mat in such a way that these consolidation points form the corners of an imaginary regular polygon, wherein imaginary connection lines between directly adjacent corners are at an angle of 90° to each other, wherein at least a part of the consolidation points is distributed over the fiber mat in such a way that they form two edge-linked regular polygons, wherein at least one of the regular polygons is a regular pentagon or a regular hexagon.

7. Glove, **characterized by** a fiber mat according to any one of claims 1 to 6.

8. Glove according to claim 7, **characterized in that** the fiber mat is arranged in such a way that the flat side of the outer non-woven facing away from the core non-woven forms the outside of the glove and that the flat side of the protective film facing away from the core non-woven faces the inner space of the glove.

9. Use of a fiber mat according to any one of claims 1 to 6 as part of a glove or put-over for objects for the purpose of liquid absorption on surfaces.

10. Use of a fiber mat according to any one of claims 1 to 6 as a flat insert, underlay or overlay for the protection of surfaces, in particular for pieces of furniture, vehicle compartments and floors.

## Revendications

1. Matelas de fibres pour la protection et/ou le nettoyage de surfaces, le matelas de fibres consistant en deux non-tissés en polypropylène disposés l'un sur l'autre, comprenant des fibres consolidées dans certaines zones sous la forme d'un non-tissé extérieur, conçu comme spunbond, et d'un non-tissé central, conçu comme meltblown, et consistant en un film de protection imperméable aux liquides disposé sur le côté plat du non-tissé central tourné à l'opposé du non-tissé extérieur.

2. Matelas de fibres selon la revendication 1, **caractérisé en ce que** le non-tissé central et le non-tissé extérieur sont liés l'un à l'autre en plusieurs points de consolidation répartis sur le matelas de fibres au moyen d'un calandrage.

3. Matelas de fibres selon la revendication 2, **caractérisé en ce que** le non-tissé central a un poids de base de 80 g/m² à 500 g/m², de préférence de 100 g/m² à 500 g/m², de préférence de 80 g/m² à 380 g/m², en particulier de 180 g/m² à 230 g/m², et **en ce que** le non-tissé extérieur a un poids de base de 7 g/m² à 40 g/m², en particulier de 20 g/m² à 30 g/m².

4. Matelas de fibres selon l'une quelconque des revendications 1 à 3, **caractérisé en ce que** le film de protection est formé d'une matière plastique, en particulier de polypropylène ou de PEHD, avec une épaisseur de couche de 30 µm à 60 µm et une densité de 0,8 g/cm³ à 1 g/cm³, en particulier de 0,93 g/cm³ à 0,97 g/cm³.

5. Matelas de fibres selon l'une quelconque des revendications 2 à 4, **caractérisé en ce que** le film de protection est laminé directement sur la face plane du non-tissé central opposée au non-tissé extérieur, le film de protection recouvrant les joints formés par calandrage entre la couche centrale et la couche extérieure au moins dans certaines zones.

6. Matelas de fibres selon la revendication 5, **caractérisé en ce qu'**au moins une partie des points de consolidation est répartie sur le matelas de fibres de telle sorte que ces points de consolidation forment les coins d'un polygone régulier imaginaire, dans lequel les lignes de connexion imaginaires entre les coins directement adjacents forment un angle de 90° l'une par rapport à l'autre, dans lequel au moins une partie des points de consolidation est répartie sur le matelas de fibres de telle sorte qu'ils forment deux polygones réguliers liés par les bords, dans lequel au moins l'un des polygones réguliers est un pentagone régulier ou un hexagone régulier.

7. Gant **caractérisé par** un matelas de fibres selon l'une quelconque des revendications 1 à 6.

8. Gant selon la revendication 7, **caractérisé en ce que** le matelas de fibres est disposé de telle sorte que le côté plat du non-tissé extérieur tourné vers l'extérieur du non-tissé central forme l'extérieur du gant et que le côté plat du film de protection tourné vers l'extérieur du non-tissé central soit tourné vers l'espace intérieur du gant.

9. Utilisation d'un matelas de fibres selon l'une quelconque des revendications 1 à 6 comme élément d'un gant ou d'un couvre-objet dans le but d'absorber des liquides sur des surfaces.

10. Utilisation d'un matelas de fibres selon l'une quelconque des revendications 1 à 6 comme insert plat, sous-couche ou surcouche pour la protection de surfaces, notamment de meubles, de compartiments de véhicules et de sols.
